# EUROPÄISCHE PATENTSCHRIFT

(11) **EP 2 810 001 B1**
(45) Veröffentlichungstag und Bekanntmachung des Hinweises auf die Patenterteilung: **10.04.2019**
(21) Anmeldenummer: 13702324.8
(22) Anmeldetag: 10.01.2013
(51) Int. Cl.: F25B 13/00, F25B 9/00, F25B 31/00, F25B 40/00, F25B 43/00

(54) **VERDICHTER-WÄRMETAUSCHER-EINHEIT FÜR EIN HEIZ-KÜHL-MODUL FÜR EIN KRAFTFAHRZEUG**
COMPRESSOR-HEAT EXCHANGER UNIT FOR A HEATING-COOLING MODULE FOR A MOTOR VEHICLE
ENSEMBLE COMPRESSEUR/ÉCHANGEUR DE CHALEUR POUR UN MODULE DE CHAUFFAGE/REFROIDISSEMENT POUR UN VÉHICULE AUTOMOBILE

(30) Priorität: 02.02.2012 DE 102012100856
(43) Veröffentlichungstag der Anmeldung: 10.12.2014
(73) Patentinhaber: Magna Powertrain Bad Homburg GmbH, 61352 Bad Homburg v. d. Höhe (DE)
(72) Erfinder: DITTMAR, Jens, 61250 Usingen (DE); BECKER, Uwe, 35510 Butzbach (DE); SCHÄFER, Tilo, 55566 Daubach (DE); ZAKERI, Gholam Reza, 61118 Bad Vilbel (DE)
(74) Vertreter: Rausch, Gabriele
(86) Internationale Anmeldenummer: PCT/DE2013/100006
(87) Internationale Veröffentlichungsnummer: WO 2013/113308

(56) Entgegenhaltungen:
- EP-A1- 0 082 764
- EP-A1- 0 504 455
- WO-A1-2011/045977
- DE-A1- 2 604 942
- DE-A1- 3 027 356
- DE-U1- 20 320 643
- GB-A- 2 071 294
- US-A- 2 121 049
- US-A1- 2002 163 785
- US-A1- 2009 014 150

## Beschreibung

Die Erfindung betrifft eine Verdichter-Wärmetauscher-Einheit, und insbesondere eine Verdichter Wärmetauschereinheit für ein Heiz-Kühl-Modul für ein Kraftfahrzeug, sowie ein Heiz-Kühl-Modul mit einer solchen Verdichter-Wärmetauscher-Einheit und ein Verfahren zum Betrieb eines Heiz-Kühl-Moduls mit einer solchen Verdichter-Wärmetauscher-Einheit.

In bekannten Heiz-Kühl-Modulen für ein Kraftfahrzeug wird ein Kältemittel durch einen Kältemittelkreislauf geführt, wobei dieser Kältemittelkreislauf üblicherweise wenigstens einen Verdichter, einen Gaskühler, einen internen Wärmetauscher, ein Expansionsorgan, einen Verdampfer und einen Sammlerausgleichsbehälter aufweist. Diese Komponenten sind, üblicherweise in der genannten Reihenfolge, über Kältemittel leitende Rohrleitungen verbunden, wobei dem Kältemittel im Kondensator/Gaskühler Wärme entzogen und im Verdampfer Wärme zugeführt wird. Über diese Wärmetransfers wird mittelbar eine Temperierung insbesondere des Innenraums eines Kraftfahrzeugs, einer Batterie, eines Antriebsmotors und/oder einer Elektronik des Kraftfahrzeugs vorgenommen. Die DE-A-2604942 offenbart eine Verdichter-Wärmetauscher-Einheit gemäß dem Oberbegriff des Anspruchs 1.

Die EP 1 990 221 A1 schlägt, aufbauend auf üblichen Heiz-Kühl-Modulen für ein Kraftfahrzeug, ein Heiz-Kühl-Modul vor, bei dem ein Kondensator/Gaskühler, ein Verdampfer und ein innerer Wärmetauscher so integriert sind, dass sie eine geschlossene Einheit bilden. Dadurch sollen geringere Montagekosten realisiert werden und die Länge der verbauten Kältemittelrohre gesenkt werden. Dabei werden die "kalten" Elemente im Kältemittelkreislauf des Heiz-Kühl-Moduls in eine geschlossene Einheit integriert.

Die Aufgabe der Erfindung ist es, einen verbesserten Aufbau eines Heiz-Kühl-Moduls für ein Kraftfahrzeug zu ermöglichen, in dem eine kompakte Anordnung von "heißen" Elementen im Kältemittelkreislauf eines Heiz-Kühl-Moduls ermöglicht wird.

Diese Aufgabe wird durch eine Verdichter-Wärmetauscher-Einheit mit den Merkmalen des Anspruchs 1 gelöst. Anspruch 10 stellt ein Verfahren zum Betrieb eines Heiz-Kühl-Moduls mit einer Verdichter-Wärmetauscher-Einheit gemäß einem der Ansprüche 1-9 unter Schutz. Zu bevorzugende Weiterbildungen sind Gegenstand der abhängigen Ansprüche.

Die Erfindung bietet insbesondere den Vorteil, dass solche Bestandteile eines Heiz-Kühl-Moduls für ein Kraftfahrzeug, welche im Kältemittelkreislauf, bezogen auf die dort auftretenden Temperaturen, relativ hohe Temperaturen aufweisen, räumlich kompakt angeordnet sind. Dadurch können vorteilhafterweise unerwünschte Wärmetransfers im Kältemittelkreislauf, insbesondere zwischen "heißen" und "kalten" Bauteilen des Heiz-Kühl-Moduls, minimiert werden und das Heiz-Kühl-Modul kleiner dimensioniert werden, wodurch Kosten- und Bauraumvorteile entstehen.

Im Folgenden wird die Erfindung in Bezug auf eine Verdichter-Wärmetauscher-Einheit für ein Heiz-Kühl-Modul für Kraftfahrzeuge beschrieben, insbesondere für verbrennungsmotorisch aber auch für elektrisch oder mittels Hybridantrieb betriebene Kraftfahrzeuge. Die Erfindung ist aber auch für ein Heiz-Kühl-Modul eines Kraftfahrzeugs mit anderen Antriebskonzepten anwendbar. Ferner kann die Erfindung auch für Heiz-Kühl-Module bei stationären Anwendungen, insbesondere Gebäuden oder dergleichen, oder für Heiz-Kühl-Module bei anderen Anwendungen eingesetzt werden. Gemäß einem Aspekt der Erfindung wird eine Verdichter-Wärmetauscher-Einheit für ein Heiz-Kühl-Modul für ein Kraftfahrzeug vorgeschlagen, in welchem wenigstens ein als Kältemittel dienendes erstes Fluid strömt, aufweisend eine Verdichtereinrichtung zum Verdichten des ersten Fluids, wenigstens eine Wärmetauschereinrichtung mit wenigstens einem ersten Kreislauf zur Durchströmung mit dem ersten Fluid und einem zweiten Kreislauf zur Durchströmung mit einem zweiten Fluid.

Diese Wärmetauschereinrichtung, welche im Kältemittelkreislauf des Heiz-Kühl-Moduls bevorzugt die Funktion eines Kondensators/Gaskühlers übernimmt, ist im Fluidstrom nach der Verdichtereinrichtung angeordnet.

Wenigstens ein Strömungskanal des ersten Kreislaufs und wenigstens ein Strömungskanal des zweiten Kreislaufs der Wärmetauschereinrichtung umschließen die Verdichtungseinrichtung wenigstens teilweise.

Das erste Fluid wird wenigstens teilweise in Strömungskanälen des ersten Kreislaufs geführt, welche die Verdichtungseinrichtung wenigstens teilweise umschließen.

In einer bevorzugten Ausführungsform ist die Verdichter-Wärmetauscher-Einheit im Kältemittelkreislauf eines Heiz-Kühl-Modul zwischen dem Kältemittelausgang eines Sammlerausgleichbehälters oder eines internen Wärmetauschers und einem Kältemitteleingang eines Expansionsorgans oder eines internen Wärmetauschers verbaut.

In einer weiteren bevorzugten Ausführungsform ist die Verdichter-Wärmetauscher-Einheit im Wesentlichen zylinderförmig ausgebildet. Wenigstens ein Strömungskanal des ersten Kreislaufs und wenigstens ein Strömungskanal des zweiten Kreislaufs der Wärmetauschereinrichtung sind spiralförmig konzentrisch um eine Längsachse der Verdichter-Wärmetauscher-Einheit angeordnet. Die Verdichtereinrichtung ist wenigstens im Wesentlichen radial innerhalb dieser Strömungskanäle angeordnet.

Dadurch kann insbesondere eine kompakte und damit Raum sparende Anordnung der Verdichter-Wärmetauscher-Einheit erreicht werden.

Die Konzentrizität dieser Strömungskanäle bezieht sich auf die radiale Entfernung von der Längsachse der Verdichter-Wärmetauscher-Einheit. Die Spiralförmigkeit der Strömungskanäle bezieht sich auf einen axialen Versatz der konzentrischen Wicklung der Strömungskanäle bezüglich dieser Längsachse.

Insbesondere um gewünschte Wärmeübergänge besonders effizient sicherzustellen und/oder unerwünschte Wärmetransfers zu minimieren, sind in einer bevorzugten Weiterbildung wenigstens ein Strömungskanal des ersten Kreislaufs und wenigstens ein Strömungskanal des zweiten Kreislaufs der Wärmetauschereinrichtung derart zueinander angeordnet, dass sie als Gegenstromwärmetauscher ausgebildet sind. Alternativ können der erste und der zweite Kreislauf der Wärmetauschereinrichtung auch derart zueinander angeordnet sein, dass sie als Gleichstromwärmetauscher ausgebildet sind.

Analog sind Ausführungsformen des ersten und/oder des zweiten Kreislaufs mit genau einem oder zwei oder drei oder vier Strömungskanälen möglich. Eine Schaltung verschiedener Strömungskanäle des ersten Kreislaufs parallel und/oder in Reihe zueinander ist möglich. Eine Schaltung verschiedener Strömungskanäle des zweiten Kreislaufs parallel und/oder in Reihe zueinander ist möglich.

In einem Gegenstromwärmetauscher weisen das im ersten Kreislauf strömende Fluid und das im zweiten Kreislauf strömende Fluid, bezogen auf den jeweils ortsnächsten Strömungskanal mit dem jeweils anderen Fluid, eine wenigstens im Wesentlichen entgegengesetzte Strömungsrichtung auf. In einem Gleichstromwärmetauscher weisen das im ersten Kreislauf strömende Fluid und das im zweiten Kreislauf strömende Fluid, bezogen auf den jeweils ortsnächsten Strömungskanal mit dem jeweils anderen Fluid, eine wenigstens im Wesentlichen gleiche Strömungsrichtung auf.

Insbesondere um einen Austausch von Wärme von/an Komponenten des Kraftfahrzeuges, welche beabstandet vom Heiz-Kühl-Modul angeordnet sind, insbesondere Innenraum, Batterie, Antriebsmotor und/oder Elektronik sicherzustellen, wird in dem ersten Kreislauf ein Fluid geführt, welches als Kältemittel dient, und in dem zweiten Kreislauf ein Fluid geführt, welches als Kühlmittel dient.

Bevorzugt ist der Kältemittelkreislauf innerhalb des Heiz-Kühl-Moduls geschlossen ausgebildet. Der Kühlmittelkreislauf ist bevorzugt derart ausgebildet, dass, je nach Strömungsrichtung und/oder Temperatur des zugeführten oder abgeführten Kühlmittels, ein Transfer von Wärme aus dem Heiz-Kühl-Modul heraus ermöglicht wird.

In einer weiteren bevorzugten Ausführungsform ist entweder wenigstens ein Strömungskanal des ersten Kreislaufs oder wenigstens ein Strömungskanal des zweiten Kreislaufs derart angeordnet, dass er im Wesentlichen von dem anderen der beiden Strömungskanäle umschlossen wird. Eine analoge Ausführung mit zwei, drei, vier oder mehr Strömungskanälen des ersten Kreislaufes und/oder mit zwei, drei, vier oder mehr Strömungskanälen des zweiten Kreislaufes ist ebenfalls möglich.

Dadurch ist es insbesondere möglich, gewünschte Wärmetransfers sehr effizient zu gestalten.

Insbesondere um effiziente Wärmetransfers kostengünstig und/oder kompakt und/oder mit hoher Sicherheit gegenüber einem Versagen im Betrieb erreichen zu können, ist in einer bevorzugten Weiterbildung die Wärmetauschereinrichtung als Rohr-in-Rohr-Wärmetauscher ausgebildet, welcher wenigstens zwei ineinander angeordnete Strömungskanäle aufweist, von denen wenigstens ein Strömungskanal zur Führung von Kühlmittel und wenigstens ein Strömungskanal zur Führung von Kältemittel bestimmt ist. Eine Wärmeübertragung erfolgt vorzugsweise über die im Wesentlichen gesamte Oberfläche des Rohres mit der geringeren Oberfläche, insbesondere des inneren Rohres. Rohr-in-Rohr-Wärmetauscher sind vorliegend insbesondere aus einem Kupfer-, Aluminium oder Stahlwerkstoff oder aus Kombinationen, von wenigstens zwei dieser und/oder anderer geeigneter Werkstoffe, ausgebildet.

Alternativ ist die Wärmetauschereinrichtung als Wärmetauscher aus einem extrudierten Metallprofil, insbesondere einer Aluminiumlegierung oder einer Kupferlegierung, ausgebildet, welches wenigstens zwei Strömungskanäle aufweist, von denen wenigstens ein Strömungskanal zur Führung von Kühlmittel und wenigstens ein Strömungskanal zur Führung von Kältemittel bestimmt ist. Bevorzugt sind beide Kanäle derart zueinander angeordnet, dass möglichst große Berührungsflächen und/oder ein guter Wärmeübergang möglich sind.

Auch andere Ausführungen einer Wärmetauschereinrichtung, in welcher Kältemittel führende und Kühlmittel führende Strömungskanäle so angeordnet sind, dass sie einen guten Wärmeübergang zwischen den Strömungskanälen ermöglichen, insbesondere sich wenigstens im Wesentlichen umschließen, verstehen sich im Rahmen dieser Erfindung.

In einer bevorzugten Weiterbildung weist das Kältemittel wenigstens einen hohen Anteil an CO2 auf. Insbesondere besteht das Kältemittel aus CO2 und/oder entspricht dabei insbesondere der Spezifikation für R744. Das Kühlmittel weist wenigstens einen hohen Anteil an Wasser auf, bevorzugt besteht es im Wesentlichen daraus.

Eine solche Zusammensetzung von Kältemittel und/oder Kühlmittel ermöglichen insbesondere einen besonders umweltfreundlichen und/oder effektiven Betrieb des Heiz-Kühl-Moduls.

In einer bevorzugten Weiterbildung wird das Kühlmittel in wenigstens einem Kühlmittelkreislauf geführt, welcher wenigstens zwei Kühlmittel-Schnittstellen aufweist, mittels welchen Kühlmittel zuführbar und/oder abführbar ist.

Dadurch wird, je nach Strömungsrichtung und/oder Temperatur des zugeführten oder abgeführten Kühlmittels, ein Transfer von Wärme aus dem Heiz-Kühl-Modul heraus ermöglicht.

Insbesondere um eine kompakte Bauweise der Verdichter-Wärmetauscher-Einheit erreichen zu können und/oder den Energieverbrauch zu minimieren, weist die Verdichtereinrichtung einen Motor auf, welcher als Elektromotor ausgebildet ist, insbesondere als bürstenloser Elektromotor, vorzugsweise als bürstenloser Außenläufer-Elektromotor.

In einer bevorzugten Weiterbildung weist die Verdichtereinrichtung ein Gehäuse mit einem Gehäusedeckel und wenigstens einem Gehäuseteil auf, wobei am Gehäusedeckel eine Steuereinrichtung wenigstens für den Motor, vorzugsweise auch für weitere steuerbare Komponenten wie insbesondere eine Schalteinrichtung oder dergleichen, angeordnet ist.

Diese Steuereinrichtung ist insbesondere dazu vorgesehen, Betriebszustände des Motors der Verdichtungseinrichtung zu sensieren und aktuieren, besonders bevorzugt um auf Basis von Betriebsparametern wie Nutzereingaben, Temperatur einer zu temperierenden Komponente, Temperatur und/oder Druck in Kältemittel oder Kühlmittel leitenden Strömungskanälen, Temperatur des Motors, Temperatur außerhalb des Fahrzeuges oder dergleichen, geeignete Betriebszustände des Motors der Verdichtungseinrichtung zu schalten, welche, insbesondere direkt, auf die Verdichtungsleistung der Verdichtungseinrichtung der Verdichter-Wärmetauscher-Einheit rückwirken.

Insbesondere um eine energieeffiziente Kühlung von Komponenten der Verdichter-Wärmetauscher-Einheit, bevorzugt des Motors und/oder der Steuereinrichtung sicherzustellen, sind wenigstens an einem von dem Gehäusedeckel und dem Gehäuseteil, vorzugsweise an beiden, außerhalb des Gehäuseinneren wenigstens ein, insbesondere genau ein oder zwei Kühlmittelmantel angeordnet. Kühlmittelmantel können mittels Umschaltventilen von vorhandenen Kühlmittelkreisläufen und/oder wenigstens zwei zusätzlichen Kühlmittelanschlüssen, vorzugsweise Anschlüsse für eine Wasser-Glycol-Mischung, mit Kühlmittel versorgt werden. Diese Kühlmittel können vorzugsweise an der Steuereinrichtung und/oder an dem Motor der Verdichtereinrichtung angeordnet sein und zusammen oder separat umschaltbar als Wärmequelle einsetzbar sein.

Vorzugsweise ist an dem Gehäuseteil außerhalb des Gehäuseinneren ein Kühlmittelmantel angeordnet, welcher das Gehäuseteil wenigstens teilweise umschließt, und/oder in einem ersten Betriebszustand der Verdichter-Wärmetauscher-Einheit dem Kühlmittelmantel durch eine dritte Kühlmittel-Schnittstelle Kühlmittel zuführbar und durch eine vierte Kühlmittel-Schnittstelle Kühlmittel abführbar.

Eine Kühlmittel-Schnittstelle ist vorliegend als Einrichtung zu verstehen, an welcher an wenigstens einem Strömungskanal zur Führung von Kühlmittel in der Verdichter-Wärmetauscher-Einheit fluiddicht wenigstens ein Strömungskanal zur Führung von Kühlmittel außerhalb der Verdichter-Wärmetauscher-Einheit angeordnet wird. Dies ermöglicht eine Zufuhr von Kühlmittel in die Verdichter-Wärmetauscher-Einheit und/oder eine Abfuhr von Kühlmittel aus der Verdichter-Wärmetauscher-Einheit. Die fluiddichte Verbindung der Strömungskanäle erfolgt dabei bevorzugt über Fügeverfahren mittels Schweißen, Löten, Verschrauben, Aufschrumpfen, Kleben und/oder dergleichen. Dies ermöglicht insbesondere einen flexiblen Einsatz der Verdichter-Wärmetauscher-Einheit als Lieferant von Wärme, bezogen auf die Temperatur einer zu temperierenden Komponente.

Vorzugsweise ist eine Schalteinrichtung zum Umschalten zwischen dem ersten und dem zweiten Betriebszustand vorgesehen, wobei eine Reihenfolge einer Durchströmung der Wärmetauschereinrichtung und/oder von jeweils wenigstens einem Kühlmittelmantel an einem Gehäuseteil und/oder an dem Gehäusedeckel durch das Umschalten verändbar ist. insbesondere sind wenigstens ein, insbesondere genau ein oder zwei, schaltbare und/oder steuerbare Ventile vorgesehen.

Die Verdichtereinrichtung ist insbesondere als Kolbenverdichter, besonders bevorzugt als Radialkolbenverdichter, ausgebildet und bevorzugt im Inneren eines druckdichten Gehäuses angeordnet.

Nach einem Aspekt der Erfindung wird ein Heiz-Kühl-Modul vorgeschlagen, bei dem der erste und der zweite Betriebszustand der Verdichter-Wärmetauscher-Einheit derart ausgebildet sind, dass das Heiz-Kühl-Modul sowohl als Kältemaschine als auch als Wärmepumpe betreibbar ist.

Dies ermöglicht insbesondere einen flexiblen Einsatz des Heiz-Kühl-Moduls als Kältemaschine und/oder als Wärmepumpe.

Nach einem Aspekt der Erfindung wird ein Verfahren zum Betrieb eines Heiz-Kühl-Moduls mit einer Verdichter-Wärmetauscher-Einheit vorgeschlagen, wobei das Heiz-Kühl-Modul zusätzlich wenigstens ein Umschaltventil aufweist. Dieses Verfahren weist wenigstens folgende Schritte auf:
- Erfassen von Betriebsparametern des Heiz-Kühl-Moduls, insbesondere mittels Sensoren der Steuereinrichtung,
- Analysieren von Betriebsparametern des Heiz-Kühl-Moduls mittels der Steuereinrichtung,
- Entscheiden einer Auswahl eines anderen Betriebszustands des Heiz-Kühl-Moduls auf Basis dieser Analyse,
- Betätigen wenigstens eines Umschaltventils zum Zuschalten/Abschalten we- nigstens eines Kühlmittelkreislaufs und/oder wenigstens eines Kühlmittelmantels.

Verschiedene Betriebszustände des Heiz-Kühl-Moduls können insbesondere anhand unterschiedlicher Schaltstellungen wenigstens eines Umschaltventils und/oder anhand der bevorzugt daraus resultierenden in den Strömungskanälen vorherrschenden Strömungsrichtungen von Kühlmittel und/oder Kältemittel unterschieden werden. Zusätzlich oder alternativ können im Sinne der Erfindung auch Betriebszustände des Motors und/oder der Verdichter-Wärmetauscher-Einheit als Betriebszustände des Heiz-Kühl-Moduls verstanden werden.

Betriebsparameter im Sinne der Erfindung sind insbesondere Nutzereingaben, Temperatur einer zu temperierenden Komponente, Temperatur und/oder Druck in Kältemittel oder Kühlmittel leitenden Strömungskanälen, Temperatur des Motors, Temperatur außerhalb des Fahrzeuges oder dergleichen.

Beispielhafte Ausführungen der Erfindung ergeben sich aus den nachfolgenden Beschreibungen in Zusammenhang mit den Figuren, welche im einzelnen, teilweise schematisch, zeigen:
- Fig. 1:: eine perspektivische Ansicht einer beispielhaften Wärmetauschereinrichtung einer erfindungsgemäßen Verdichter-Wärmetauscher-Einheit,
- Fig. 2:: eine perspektivische Seitenansicht einer beispielhaften erfindungsgemäßen Verdichter-Wärmetauscher-Einheit,
- Fig. 3:: eine perspektivische Draufsicht der beispielhaften erfindungsgemäßen Verdichter-Wärmetauscher-Einheit nach Fig. 2 , und
- Fig. 4:: eine teilweise geschnittene Ansicht einer weiteren beispielhaften erfindungsgemäßen Verdichter-Wärmetauscher-Einheit.

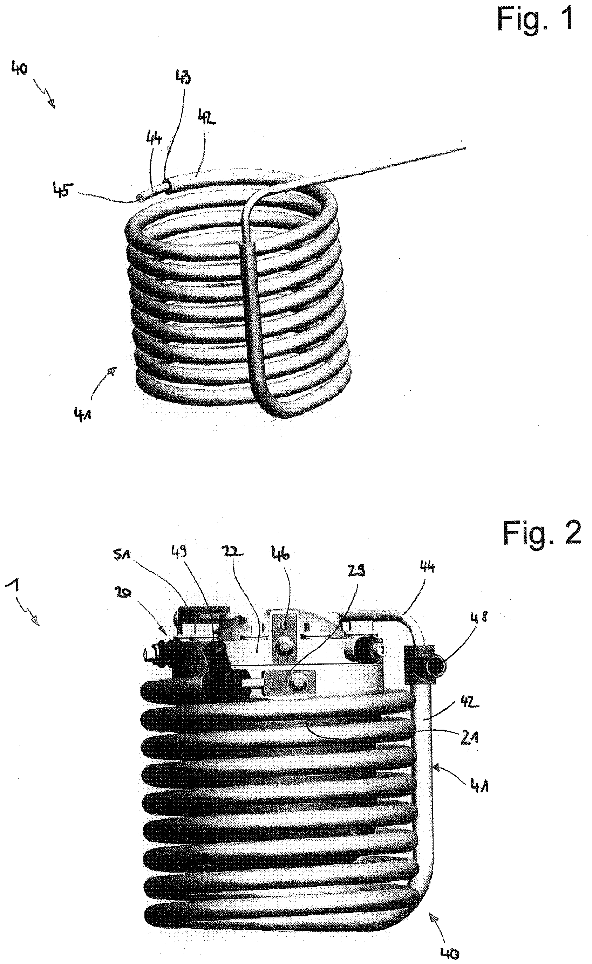

Fig. 1 zeigt eine beispielhafte Ausführung einer als Rohr-in-Rohr-Wärmetauscher ausgebildeten Wärmetauschereinrichtung 40 einer beispielhaften erfindungsgemäßen Verdichter-Wärmetauscher-Einheit 1. Dieser Rohr in Rohr-in-Rohr-Wärmetauscher 40 weist ein spiralförmig gebogenes Doppelrohr 41 auf, wobei die einzelnen Windungen des Doppelrohres 41 in dessen spiralförmigem Bereich konzentrisch um die Längsachse L der Verdichter-Wärmetauscher-Einheit 1 angeordnet sind. Das Doppelrohr 41 weist ein inneres Rohr 44 und ein äußeres Rohr 42 auf. Das innere Rohr 44 grenzt ein inneres Rohrvolumen 45 gegenüber einem äußeren Rohrvolumen 43 ab, wobei das äußere Rohrvolumen 43 von dem äußeren Rohr 42 gegenüber der Umgebung des Rohr-in-Rohr-Wärmetauschers 40 abgegrenzt wird.

In dem inneren Rohrvolumen 45 strömt in dieser beispielhaften Ausführung Kältemittel, hier R744 (bzw. CO2), in entgegengesetzte Richtung zu dem Kühlmittel, hier eine Wasser-Glykol-Mischung, welche in dem äußeren Rohrvolumen 43 strömt.

In weiteren beispielhaften Ausführungen ist vorgesehen, dass in dem inneren Rohrvolumen 45 Kühlmittel strömt, und in dem äußeren Rohrvolumen 43 Kältemittel und/oder dass das Kältemittel und das Kühlmittel den Rohr-in-Rohr-Wärmetauscher 40 gleichgerichtet durchströmen.

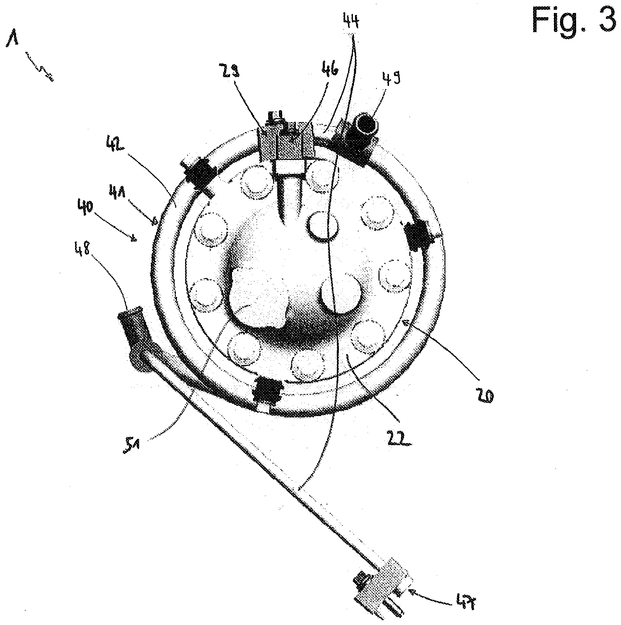

Fig. 2 und 3 zeigen verschiedene perspektivische Ansichten einer beispielhaften erfindungsgemäßen Verdichter-Wärmetauscher-Einheit 1, in welcher der Rohr-in-Rohr-Wärmetauscher aus Fig. 1 als Wärmetauschereinrichtung 40 verbaut sein kann. Die Wärmetauschereinrichtung 40 ist im Wesentlichen radial um die Verdichtereinrichtung 20 angeordnet und bezüglich des Kältemittelstromes mittels einer ersten Kältemittel-Schnittstelle 29 mit dieser verbunden. Die erste Kältemittel-Schnittstelle 29 ist derart ausgebildet, dass auch die geometrische Festlegung von Wärmetauschereinrichtung 40 und Verdichtereinrichtung 20 zueinander darüber erfolgt.

Die Verdichtereinrichtung 20 weist in dieser beispielhaften Ausführung einen nicht dargestellten Radialkolbenverdichter auf, welcher in einem durch ein Gehäuseteil 21 und einen Gehäusedeckel 22 abgegrenzten Volumen angeordnet ist. Der Verdichtereinrichtung 20 wird über eine zweite Kältemittel-Schnittstelle 46 Kältemittel (R744 bzw. CO2) zugeführt, mittels des Radialkolbenverdichters verdichtet um anschließend über die erste Kältemittel-Schnittstelle 29 von der Verdichtereinrichtung 20 zur Wärmetauschereinrichtung 40 zu strömen.

In der Wärmetauschereinrichtung 40 strömt das Kältemittel im inneren Rohr 44 eines Doppelrohres 41 bis zur dritten Kältemittel-Schnittstelle 47 und tauscht dabei Wärmeenergie mit einem Kühlmittel aus, welches im äußeren Rohr 42 des Doppelrohres 41 entgegen der Strömungsrichtung des Kältemittels strömt. Das Kühlmittel wird über die erste Kühlmittel-Schnittstelle 48 des Doppelrohres 41 zugeführt und über die zweite Kühlmittel-Schnittstelle 49 des Doppelrohres 41 abgeführt.

Am Gehäusedeckel 22 ist ein Anschluss 51 für eine, in dieser Figur nicht dargestellte, Steuereinrichtung angeordnet

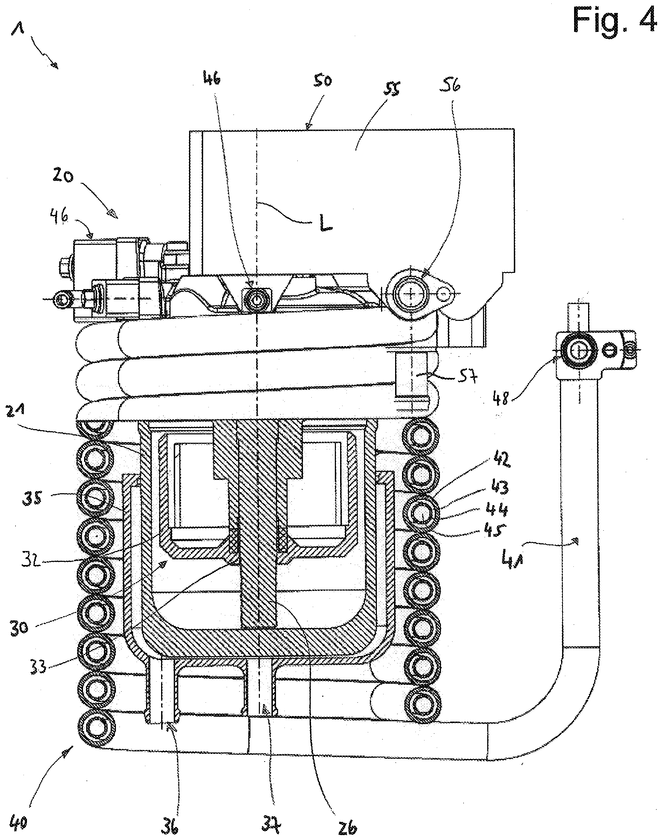

Fig. 4 zeigt eine teilweise geschnittene Ansicht einer weiteren beispielhaften erfindungsgemäßen Verdichter-Wärmetauscher-Einheit 1, wobei im geschnittenen Bereich ein als bürstenloser Außenläufer-Elektromotor ausgebildeter Motor 30 dargestellt ist. Der Motor 30 weist einen Außenläufer 32 auf, welcher mittels einer drehfesten Verbindung 33 mit einem nicht exzentrischen Bereich der Exzenterwelle 26 der Verdichtereinrichtung 20 verbunden ist.

Der Motor 30 dieser Verdichtereinrichtung 20 wird mittels eines Kühlmittelmantels 35, welcher außerhalb des vom Gehäuse 21, 22 abgeschlossenen Volumens angeordnet ist, gekühlt. Dem Kühlmittelmantel 35 wird über Kühlmittel-Schnittstellen 36, 37 Kühlmittel zu-/abgeführt, wobei das Kühlmittel in einem Volumen zwischen den beiden Kühlmittel-Schnittstellen 36, 37 strömt, welches vom Kühlmittelmantel 35 und dem Gehäuseteil 21 abgegrenzt wird.

Am Gehäusedeckel 22 der Verdichtereinrichtung 20 ist eine Steuereinrichtung 50 angeordnet. Diese steuert insbesondere Betriebszustände des Motors auf Basis von vorzugsweise Nutzereingaben, Temperatur einer zu temperierenden Komponente, Temperatur und/oder Druck in Kältemittel oder Kühlmittel leitenden Strömungskanälen, Temperatur des Motors, Temperatur außerhalb des Fahrzeuges oder dergleichen, wobei diese Betriebszustände des Motors mittels geeigneter, mit der Steuereinrichtung verbundener Sensoreinrichtungen, insbesondere Temperatursensoren und/oder Drucksensoren und/oder Bedienelemente für Benutzer, erfasst werden.

Die Steuereinrichtung 50 kann mittels eines nicht dargestellten Anschlusses elektrisch mit einer Stromquelle und vorzugsweise zusätzlich zur unidirektionalen/bidirektionale Datenübertragung mit Datenverarbeitungseinrichtungen außerhalb der Verdichter-Wärmetauscher-Einheit 1 verbunden werden.

Zur Kühlung der Steuereinrichtung 50 ist an der Steuereinrichtung und dem Gehäusedeckel 22 ein ebenfalls von einem Kühlmittel durchströmbarer Kühlmittelmantel 55 angeordnet, wobei das Kühlmittel über die fünfte und sechste Kühlmittelschnittstelle 56, 57 zu- und abgeführt wird.

### Bezugszeichenliste

- 1: Verdichter-Wärmetauscher-Einheit

- 20: Verdichtereinrichtung
- 21: Gehäuseteil
- 22: Gehäusedeckel
- 26: Exzenterwelle des Verdichters
- 29: erste Kältemittel-Schnittstelle (von der Verdichtereinrichtung zur Wärme tauschereinrichtung)

- 30: Motor
- 32: Motoraußenläufer (Rotor)
- 33: drehfeste Verbindung des Trägers mit der Exzenterwelle des Verdichters
- 35: Kühlmittelmantel für Motor
- 36: dritte Kühlmittel-Schnittstelle
- 37: vierte Kühlmittel-Schnittstelle

- 40: Wärmetauschereinrichtung
- 41: Doppelrohr
- 42: äußeres Rohr
- 43: äußeres Rohrvolumen
- 44: inneres Rohr
- 45: inneres Rohrvolumen
- 46: zweite Kältemittel-Schnittstelle (vom internen Wärmetauscher oder vom Sammlerausgleichsbehälter zur Verdichtereinrichtung)
- 47: dritte Kältemittel-Schnittstelle (von der Wärmetauschereinrichtung zum internen Wärmetauscher oder zum Expansionsorgan)
- 48: erste Kühlmittel-Schnittstelle
- 49: zweite Kühlmittel-Schnittstelle
- 50: Steuereinrichtung

- 55: Kühlmittelmantel für Steuereinrichtung
- 56: fünfte Kühlmittelschnittstelle
- 57: sechste Kühlmittelschnittstelle

- L: Längsachse der Verdichter-Wärmetauscher-Einheit

## Patentansprüche

1. Verdichter-Wärmetauscher-Einheit (1) für ein Heiz-Kühl-Modul für ein Kraftfahrzeug, in welchem wenigstens ein als Kältemittel dienendes erstes Fluid strömt, aufweisend
- eine Verdichtereinrichtung (20) mit einem Gehäuse (21,22) zum Verdichten des ersten Fluids,
- wenigstens eine Wärmetauschereinrichtung (40) mit wenigstens einem ersten Kreislauf zur Durchströmung mit dem ersten Fluid und einem zweiten Kreislauf zur Durchströmung mit einem zweiten Fluid,
wobei diese Wärmetauschereinrichtung (40) im Fluidstrom nach der Verdichtereinrichtung (20) angeordnet ist, und die Wärmetauschereinrichtung (40) als Rohr-in-Rohr-Wärmetauscher ausgebildet ist, welcher wenigstens zwei ineinander angeordnete Strömungskanäle (43,45) aufweist, von denen wenigstens ein Strömungskanal (45;43) zur Führung von Kühlmittel und wenigstens ein Strömungskanal (43;45) zur Führung von Kältemittel bestimmt ist, und wobei Wärmetauschereinrichtung (40) die Verdichtungseinrichtung (20) wenigstens teilweise umschließt und wobei die Verdichtereinrichtung (20) einen Motor (30) aufweist, welcher als Elektromotor ausgebildet ist, insbesondere als bürstenloser Elektromotor, vorzugsweise als bürstenloser Außenläufer-Elektromotor, **gekennzeichnet dadurch, dass** die Verdichtereinrichtung (20) einen Kühlmittelmantel (35) aufweist und dass der Kreislauf des zweiten Fluids mit einem Volumen in Verbindung steht das vom Kühlmittelmantel (35) und dem Gehäuse (21) abgegrenzt wird.

2. Verdichter-Wärmetauscher-Einheit (1) gemäß Anspruch 1, **gekennzeichnet dadurch, dass**
die Verdichter-Wärmetauscher-Einheit (1) im Wesentlichen zylinderförmig ausgebildet ist, und dass
der wenigstens eine Strömungskanal (45) des ersten Kreislaufs und der wenigstens eine Strömungskanal (43) des zweiten Kreislaufs der Wärmetauschereinrichtung (40) spiralförmig konzentrisch um eine Längsachse (L) der Verdichter-Wärmetauscher-Einheit (1) angeordnet sind, und dass die Verdichtereinrichtung (20) wenigstens im Wesentlichen radial innerhalb dieser Strömungskanäle (45,43) angeordnet ist.

3. Verdichter-Wärmetauscher-Einheit (1) gemäß einem der vorherigen Ansprüche, **gekennzeichnet dadurch, dass**
wenigstens ein Strömungskanal (45) des ersten Kreislaufs und wenigstens ein Strömungskanal (43) des zweiten Kreislaufs der Wärmetauschereinrichtung (40) derart zueinander angeordnet sind, dass sie als Gegenstromwärmetauscher oder als Gleichstromwärmetauscher ausgebildet sind.

4. Verdichter-Wärmetauscher-Einheit (1) gemäß Anspruch 3, **gekennzeichnet dadurch, dass**
in dem ersten Kreislauf (45) ein Fluid geführt wird, welches als Kältemittel ausgebildet ist, und dass in dem zweiten Kreislauf (43) ein Fluid geführt wird, welches als Kühlmittel ausgebildet ist.

5. Verdichter-Wärmetauscher-Einheit (1) gemäß einem der Ansprüche 1 bis 4, **gekennzeichnet dadurch, dass**
die Wärmetauschereinrichtung (40) als Wärmetauscher aus einem extrudierten Metallprofil, insbesondere einer Aluminiumlegierung oder einer Kupferlegierung, ausgebildet ist, welches wenigstens zwei Strömungskanäle (43,45) aufweist, von denen wenigstens ein Strömungskanal (45;43) zur Führung von Kühlmittel und wenigstens ein Strömungskanal (43;45) zur Führung von Kältemittel bestimmt ist.

6. Verdichter-Wärmetauscher-Einheit (1) gemäß einem der vorherigen Ansprüche, **gekennzeichnet dadurch, dass**
das Kältemittel wenigstens einen hohen Anteil an CO2 aufweist, insbesondere im Wesentlichen daraus besteht, und/oder das Kühlmittel wenigstens einen hohen Anteil einer Wasser-Glykol-Mischung aufweist, insbesondere im Wesentlichen daraus besteht.

7. Verdichter-Wärmetauscher-Einheit (1) gemäß einem der vorherigen Ansprüche, **gekennzeichnet dadurch, dass**
das Kühlmittel in wenigstens einem Kühlmittelkreislauf geführt wird, welcher wenigstens zwei Kühlmittel-Schnittstellen (48,49) aufweist, mittels welchen Kühlmittel zuführbar und/oder abführbar ist.

8. Verdichter-Wärmetauscher-Einheit (1) gemäß Anspruch 1, **gekennzeichnet dadurch, dass** das Gehäuse einen Gehäusedeckel (22) und wenigstens einen Gehäuseteil (21) aufweist, wobei am Gehäusedeckel (22) eine Steuereinrichtung (50) für den Motor angeordnet ist.

9. Verdichter-Wärmetauscher-Einheit (1) gemäß Anspruch 8, **gekennzeichnet dadurch, dass**
die Kühlung der Steuereinrichtung über einen mit dem zweiten Fluid durchströmten Kühlmittelmantel (55) erfolgt.

10. Verfahren zum Betrieb eines Heiz-Kühl-Moduls mit einer Verdichter-Wärmetauscher-Einheit (1) gemäß einem der Ansprüche 8 oder 9, zusätzlich aufweisend wenigstens ein Umschaltventil, mit den Schritten:
- Erfassen von Betriebsparametern des Heiz-Kühl-Moduls mittels der Steuereinrichtung (50),
- Analysieren von Betriebsparametern des Heiz-Kühl-Moduls mittels der Steuereinrichtung (50),
- Entscheiden einer Auswahl eines anderen Betriebszustands des Heiz-Kühl-Moduls auf Basis dieser Analyse,
- Betätigen wenigstens eines Umschaltventils zum Zuschalten/Abschalten wenigstens eines Kühlmittelkreislaufs und/oder wenigstens eines Kühlmittelmantels.

## Claims

1. Compressor-heat exchanger unit (1) for a heating-cooling module for a motor vehicle, in which at least one first fluid serving as a refrigerant flows, having
- a compressor device (20) that has a housing (21, 22) for compressing the first fluid,
- at least one heat exchanger device (40) that has at least one first circuit for the first fluid to flow through and a second circuit for a second fluid to flow through,
wherein this heat exchanger unit (40) is arranged in the fluid flow after the compressor device (20), and the heat exchanger device (40) is designed as a tube-in-tube heat exchanger, which has at least two flow channels (43, 45) arranged one inside the other, of which at least one flow channel (45; 43) is intended to carry coolant and at least one flow channel (43; 45) is intended to carry refrigerant, and wherein the heat exchanger device (40) at least partially surrounds the compressor device (20) and wherein the compressor device (20) has a motor (30), which is designed as an electric motor, in particular as a brushless electric motor, preferably as a brushless external rotor electric motor, **characterized in that** the compressor device (20) has a coolant jacket (35) and **in that** the circuit of the second fluid is connected to a volume which is delimited by the coolant jacket (35) and the housing (21).

2. Compressor-heat exchanger unit (1) according to Claim 1, **characterized in that** the compressor-heat exchanger unit (1) is of substantially cylindrical design, and that the at least one flow channel (45) of the first circuit and the at least one flow channel (43) of the second circuit of the heat exchanger device (40) are arranged concentrically in a spiral around a longitudinal axis (L) of the compressor-heat exchanger unit (1), and that the compressor device (20) is arranged at least substantially radially to the inside of these flow channels (45, 43).

3. compressor-heat exchanger unit (1) according to one of the preceding claims, **characterized in that** at least one flow channel (45) of the first circuit and at least one flow channel (43) of the second circuit of the heat exchanger device (40) are arranged in such a way relative to one another that they are formed as countercurrent heat exchangers or as co-current heat exchangers.

4. Compressor-heat exchanger unit (1) according to Claim 3, **characterized in that** a fluid designed as a refrigerant is carried in the first circuit (45), and **in that** a fluid designed as a coolant is carried in the second circuit (43).

5. Compressor-heat exchanger unit (1) according to one of Claims 1 to 4, **characterized in that**
the heat exchanger device (40) is designed as a heat exchanger comprising an extruded metal profile, in particular an aluminum alloy or a copper alloy, which has at least two flow channels (43, 45), of which at least one flow channel (45; 43) is intended to carry coolant and at least one flow channel (43; 45) is intended to carry refrigerant.

6. Compressor-heat exchanger unit (1) according to one of the preceding claims, **characterized in that**
the refrigerant has at least a high proportion of CO2, in particular consisting substantially thereof, and/or the coolant has at least a high proportion of a water/glycol mixture, in particular consisting substantially thereof.

7. Compressor-heat exchanger unit (1) according to one of the preceding claims, **characterized in that**
the coolant is carried in at least one coolant circuit, which has at least two coolant interfaces (48, 49), by means of which coolant can be fed in and/or discharged.

8. Compressor-heat exchanger unit (1) according to Claim 1, **characterized in that** the housing has a housing cover (22) and at least one housing part (21), wherein a control device (50) for the motor is arranged on the housing cover (22).

9. Compressor-heat exchanger unit (1) according to
Claim 8, **characterized in that**
the control device is cooled via a cooling jacket (55) through which the second fluid flows.

10. Method for operating a heating-cooling module having a compressor-heat exchanger unit (1) according to one of Claims 8 or 9, additionally having at least one changeover valve, comprising the following steps:
- detecting operating parameters of the heating-cooling module by means of the control device (50),
- analyzing operating parameters of the heating-cooling module by means of the control device (50),
- deciding to choose another operating state of the heating-cooling module on the basis of said analysis,
- actuating at least one changeover valve for connecting/disconnecting at least one coolant circuit and/or at least one coolant jacket.

## Revendications

1. Unité de compresseur-échangeur de chaleur (1) pour un module de chauffage-refroidissement pour un véhicule automobile dans lequel s'écoule au moins un premier fluide servant de fluide caloporteur, présentant
- un dispositif de compresseur (20) avec un boîtier (21, 22) pour comprimer le premier fluide,
- au moins un dispositif d'échangeur de chaleur (40) avec au moins un premier circuit destiné à être parcouru par le premier fluide et un deuxième circuit destiné à être parcouru par un deuxième fluide,
ce dispositif d'échangeur de chaleur (40) étant disposé dans l'écoulement fluidique après le dispositif de compresseur (20), et le dispositif d'échangeur de chaleur (40) étant réalisé sous forme d'échangeur de chaleur tube-en-tube, qui présente au moins deux canaux d'écoulement (43, 45) disposés l'un dans l'autre, dont au moins un canal d'écoulement (45 ; 43) est prévu pour guider du réfrigérant et au moins un canal d'écoulement (43 ; 45) est prévu pur guider du fluide caloporteur, et le dispositif d'échangeur de chaleur (40) entourant au moins en partie le dispositif de compression (20) et le dispositif de compression (20) présentant un moteur (30) qui est réalisé sous forme de moteur électrique, en particulier sous forme de moteur électrique sans balai, de préférence sous forme de rotor extérieur-moteur électrique, **caractérisée en ce que** le dispositif de compresseur (20) présente une enveloppe de réfrigérant (35) et **en ce que** le circuit du deuxième fluide est en liaison avec un volume qui est délimité par l'enveloppe de réfrigérant (35) et le boîtier (21).

2. Unité de compresseur-échangeur de chaleur (1) selon la revendication 1, **caractérisée en ce que** l'unité de compresseur-échangeur de chaleur (1) est réalisée essentiellement sous forme cylindrique, et **en ce que** l'au moins un canal d'écoulement (45) du premier circuit et l'au moins un canal d'écoulement (43) du deuxième circuit du dispositif d'échangeur de chaleur (40) sont disposés en spirale sous forme concentrique autour d'un axe longitudinal (L) de l'unité de compresseur-échangeur de chaleur (1), et **en ce que** le dispositif de compresseur (20) est disposé au moins essentiellement radialement à l'intérieur de ces canaux d'écoulement (45, 43).

3. Unité de compresseur-échangeur de chaleur (1) selon l'une quelconque des revendications précédentes, **caractérisée en ce**
**qu'**au moins un canal d'écoulement (45) du premier circuit et au moins un canal d'écoulement (43) du deuxième circuit du dispositif d'échangeur de chaleur (40) sont disposés l'un par rapport à l'autre de telle sorte qu'ils soient réalisés sous forme d'échangeur de chaleur à contre-courant ou sous forme d'échangeur de chaleur à co-courant.

4. Unité de compresseur-échangeur de chaleur (1) selon la revendication 3, **caractérisée en ce**
**qu'**un fluide est guidé dans le premier circuit (45), lequel est réalisé en tant que fluide caloporteur, et **en ce qu'**un fluide est guidé dans le deuxième circuit (43), lequel est réalisé en tant que réfrigérant.

5. Unité de compresseur-échangeur de chaleur (1) selon l'une quelconque des revendications 1 à 4, **caractérisée en ce que**
le dispositif d'échangeur de chaleur (40) est réalisé sous forme d'échangeur de chaleur constitué d'un profil métallique extrudé, en particulier d'un alliage d'aluminium ou d'un alliage de cuivre, qui présente au moins deux canaux d'écoulement (43, 45), dont au moins un canal d'écoulement (45 ; 43) est prévu pour le guidage de réfrigérant et au moins un canal d'écoulement (43 ; 45) est prévu pour le guidage de fluide caloporteur.

6. Unité de compresseur-échangeur de chaleur (1) selon l'une quelconque des revendications précédentes,
**caractérisée en ce que**
le fluide caloporteur présente au moins une grande proportion de CO2, en particulier est constitué essentiellement de CO2, et/ou **en ce que** le réfrigérant présente au moins une grande proportion d'un mélange d'eau et de glycol, en particulier se compose essentiellement d'un mélange d'eau et de glycol.

7. Unité de compresseur-échangeur de chaleur (1) selon l'une quelconque des revendications précédentes, **caractérisée en ce que**
le réfrigérant est guidé dans au moins un circuit de réfrigérant qui présente au moins deux interfaces de réfrigérant (48, 49), au moyen desquelles du réfrigérant peut être acheminé et/ou évacué.

8. Unité de compresseur-échangeur de chaleur (1) selon la revendication 1, **caractérisée en ce que**
le boîtier présente un couvercle de boîtier (22) et au moins une partie de boîtier (21), un dispositif de commande (50) pour le moteur étant disposé au niveau du couvercle de boîtier (22).

9. Unité de compresseur-échangeur de chaleur (1) selon la revendication 8, **caractérisée en ce que**
le refroidissement du dispositif de commande s'effectue par le biais d'une enveloppe de réfrigérant (55) parcourue par le deuxième fluide.

10. Procédé de fonctionnement d'un module de chauffage-refroidissement avec une unité de compresseur-échangeur de chaleur (1) selon l'une quelconque des revendications 8 ou 9, présentant en outre au moins une soupape de commutation, comprenant les étapes consistant à :
- détecter des paramètres de fonctionnement du module de chauffage-refroidissement au moyen du dispositif de commande (50),
- analyser des paramètres de fonctionnement du module de chauffage-refroidissement au moyen du dispositif de commande (50),
- décider d'un choix d'un autre état de fonctionnement du module de chauffage-refroidissement sur la base de cette analyse,
- actionner au moins une soupape de commutation pour commuter/couper au moins un circuit de réfrigérant et/ou au moins une enveloppe de réfrigérant.
